# EUROPEAN PATENT APPLICATION

(11) **EP 4 368 963 A1**
(43) Date of publication of application: **15.05.2024**
(21) Application number: 22206241.6
(22) Date of filing: 08.11.2022
(51) Int. Cl.: G01N 1/42, H01J 37/20

(54) **METHOD OF PREPARING A CRYOGENIC SAMPLE WITH IMPROVED COOLING CHARACTERISTICS**

(71) Applicant: FEI COMPANY, Hillsboro, OR 97124 (US)
(72) Inventor: Kuijper, Maarten, 5602 BS Eindhoven (NL); Hazenberg, John, 5602 BS Eindhoven (NL); Hapers, Bas, 5602 BS Eindhoven (NL)
(74) Representative: Janssen, Francis-Paul

(57) **Abstract**

The invention relates to a method and an apparatus for preparing a cryogenic sample, whereby the sample is subjected to rapid cooling using a cryogen. The method comprises the step of providing a sample, said sample comprising a specimen provided on a substantially planar specimen carrier. The method comprises the step of providing at least one flow device for transporting cryogenic fluid to said sample, wherein said flow device comprises a first nozzle for directing a flow of cryogenic fluid onto said sample. Then, the sample is positioned next to said first nozzle and a flow of cryogenic fluid is provided out of said first nozzle in such a way that the sample is cryogenically cooled. As defined herein, the nozzle opening of the first nozzle has a width, as measured in a first direction, and a height, as measured in a second direction substantially perpendicular to said first direction, wherein said width is larger than said height. Using a non-circular, such as essentially oval or rectangular nozzle opening provides for more improved cooling, so that all parts of the specimen carrier are evenly cooled.

## Description

The invention relates to a method of preparing a cryogenic sample, whereby the sample is subjected to rapid cooling using a cryogen, and comprising the steps of providing a sample, said sample comprising a specimen that is provided on a substantially planar specimen carrier, providing at least one flow device for transporting cryogenic fluid to said sample, wherein said flow device comprises a first nozzle for directing a flow of cryogenic fluid onto said sample, and positioning said sample next to said first nozzle and providing a flow of cryogenic fluid out of said first nozzle in such a way that the sample is cryogenically cooled;

The invention additionally relates to an apparatus for performing such a method.

The term "specimen" should be interpreted as referring to an object of interest that can be studied using one or more study devices, for example. The specimen is provided on a specimen carrier, which can be used for easy manipulation of the object of interest during study in these study devices.

The term "sample" should be interpreted as the combination of a specimen carrier with a specimen provided thereon.

The term "cryogen" should be interpreted as referring to a liquid at cryogenic temperatures, i.e. at or below -150 ºC. Examples of such cryogens include liquid ethane, liquid propane, liquid oxygen, and mixtures hereof.

The term "cryogenic sample" should be interpreted as referring to a sample (i.e. a specimen provided on a specimen carrier) at cryogenic temperatures, i.e. at cryogenic temperatures at or below -150 ºC, and that can be studied in study devices that are arranged to operate, at least partly, at cryogenic temperatures. As an example, the study device may comprise a charged particle microscope.

The term "nozzle" should be interpreted as referring to any element that is designed to direct the cryogenic fluid in a stream onto the sample. The nozzle may comprise features that can be used to establish the direction or characteristics of the cryogenic fluid flow as it exits a flow channel, for example, such as a channel, bore, pipe, hose, tube, or the like. The term nozzle, as defined herein, includes mouthpieces as well as orifices.

Charged particle microscopy is a well-known and increasingly important technique for imaging microscopic objects, particularly in the form of electron microscopy. Historically, the basic genus of electron microscope has undergone evolution into a number of well-known apparatus species, such as the Transmission Electron Microscope (TEM), Scanning Electron Microscope (SEM), and Scanning Transmission Electron Microscope (STEM), and also into various sub-species, such as so-called "dual-beam" tools (e.g. a FIB-SEM), which additionally employ a "machining" Focused Ion Beam (FIB), allowing supportive activities such as ion-beam milling or Ion-Beam-Induced Deposition (IBID), for example. More specifically:
- In a SEM, irradiation of a sample by a scanning electron beam precipitates emanation of "auxiliary" radiation from the sample, in the form of secondary electrons, backscattered electrons, X-rays and photoluminescence (infrared, visible and/or ultraviolet photons), for example; one or more components of this flux of emanating radiation is/are then detected and used for image accumulation purposes.
- In a TEM, the electron beam used to irradiate the sample is chosen to be of a high-enough energy to penetrate the specimen (which, to this end, will generally be thinner than in the case of an SEM sample); the flux of transmitted electrons emanating from the specimen can then be used to create an image. When such a TEM is operated in scanning mode (thus becoming a STEM), the image in question will be accumulated during a scanning motion of the irradiating electron beam.

As an alternative to the use of electrons as irradiating beam, charged particle microscopy can also be performed using other species of charged particles. In this respect, the phrase "charged particle" should be broadly interpreted as encompassing electrons, positive ions (e.g. Ga or He ions), negative ions, protons and positrons, for instance.

It should be noted that, in addition to imaging and performing (localized) surface modification (e.g. milling, etching, deposition, etc.), a charged particle microscope may also have other functionalities, such as performing spectroscopy, examining diffractograms, etc.

In all cases, a Charged Particle Microscope (CPM) will comprise at least the following components:
- A radiation source, such as a Schottky electron source or ion gun.
- An illuminator, which serves to manipulate a "raw" radiation beam from the source and perform upon it certain operations such as focusing, aberration mitigation, cropping (with an aperture), filtering, etc. It will generally comprise one or more (charged-particle) lenses and may comprise other types of (particle-)optical components. If desired, the illuminator can be provided with a deflector system that can be invoked to cause its output beam to perform a scanning motion across the sample being investigated.
- A sample holder for holding a sample under investigation. The sample holder is in particular arranged for holding the specimen carrier (with the specimen thereon), and is generally arranged for positioning (e.g. tilting, rotating) the specimen carrier with respect to the charged particle beam. If desired, this sample holder can be moved so as to effect scanning motion of the beam with respect to the sample. In general, such a sample holder will be connected to a positioning system such as a mechanical stage. The sample holder may comprise means to maintain the sample in a given (hot or cold) temperature range; in the specific context of the current invention, it will typically comprise means for maintaining the sample at cryogenic temperatures.
- A detector (for detecting radiation emanating from an irradiated specimen), which may be unitary or compound/distributed in nature, and which can take many different forms, depending on the radiation being detected. Examples include photodiodes, CMOS detectors, CCD detectors, photovoltaic cells, X-ray detectors (such as Silicon Drift Detectors and Si(Li) detectors), etc. In general, a CPM may comprise several different types of detector, selections of which can be invoked in different situations.

In the case of a transmission-type microscope (such as a (S)TEM, for example), the CPM will also comprise:
- An imaging system, which essentially takes charged particles that are transmitted through a specimen (plane) and directs (focuses) them onto analysis apparatus, such as a detection/imaging device, spectroscopic apparatus (such as an EELS module; EELS = Electron Energy-Loss Spectroscopy), etc. As with the illuminator referred to above, the imaging system may also perform other functions, such as aberration mitigation, cropping, filtering, etc., and it will generally comprise one or more charged-particle lenses and/or other types of particle-optical components.

In what follows, the invention will - by way of example - often be set forth in the specific context of electron microscopy. However, such simplification is intended solely for clarity/illustrative purposes, and should not be interpreted as limiting.

Biological specimens (such as cells, cell components, single-cellular organisms, etc.) that need to be stored and studied in a body of aqueous liquid (such as water, electrolyte, cell fluid, blood plasma, etc.) can present significant challenges vis-à-vis their examination in a CPM, since:
- An aqueous liquid introduced into a (quasi-)vacuum environment of a CPM will start to outgas/boil, thus tending to degrade the specimen;
- In order to prevent this, the specimen can be provided on a sample carrier, after which it can be frozen before being introduced into said vacuum;
- However, so as to prevent damage to the specimen caused by the formation of (sharp) ice crystals, such freezing must generally be performed very rapidly, with the aim of achieving specimen vitrification (solidification into an amorphous, glass-like phase) without significant ice crystallization.

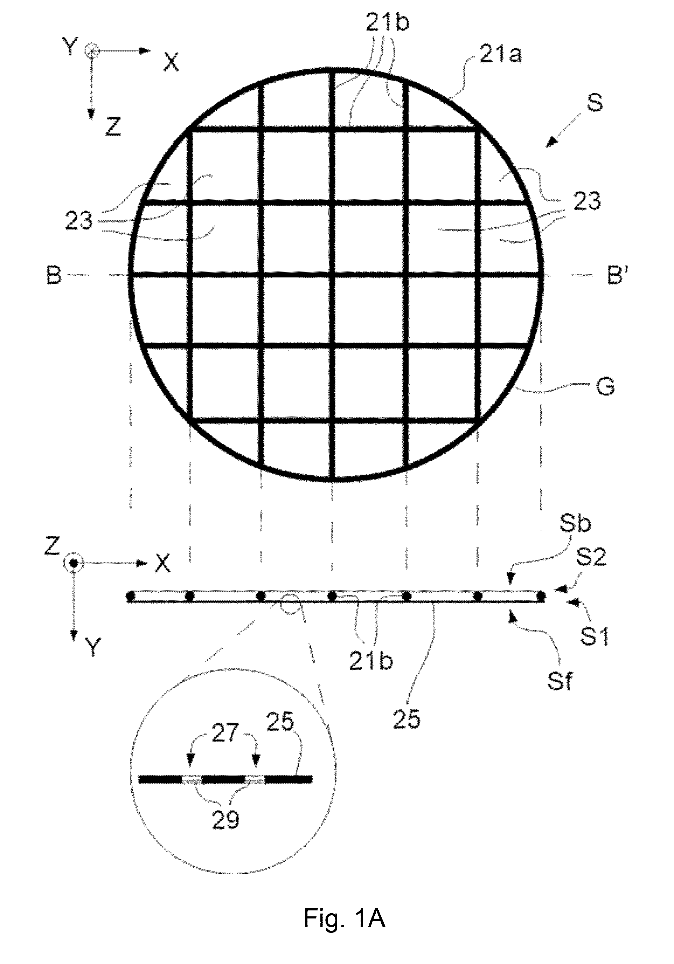

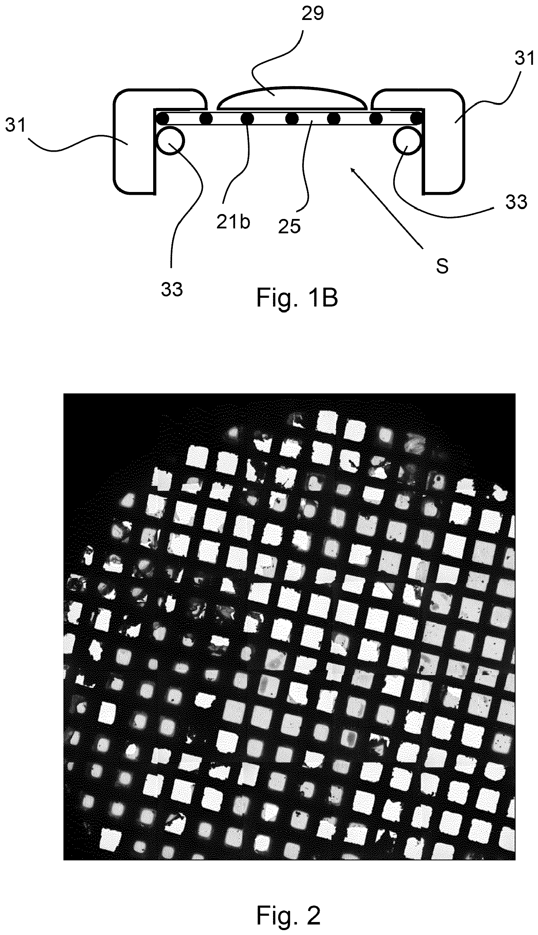

In order to facilitate such vitrification - but also to allow the specimen to be studied in a transmission-type CPM, such as a TEM - the sample should be relatively thin (sheet-like), but one should still be able to support it by its edges (so that the employed means of support have no significant effect on beam penetration). To this end, use is typically made of a grid-like holder structure (such as a so-called TEM Autogrid^{®}), across which a perforated membrane (such as a so-called "holey carbon film") is spanned, in whose perforations a small quantity of specimen can be held (e.g. by surface tension effects). See Figure 1, for example.

A method as set forth in the opening paragraph above is known from US 2017/0169991 A1 (also published as EP3179229A1) and from US 2019/0180974 A1 (also published as EP3495798A1).

Vitrification methods may include the plunging of the sample in a bath of liquid ethane. Plunging may include the introduction of the sample in the bath of liquid ethane, wherein the sample is kept at a horizontal orientation.

Other vitrification methods include the use of a flow of liquid coolant that is directed to the sample. The sample may be held with the specimen carrier extending at a generally vertical orientation, and the flow of liquid coolant may be provided from opposite sides of the sample. Other vitrification methods include a combination of providing a flow of liquid coolant, and concurrently flush*ing the sample in a bath of liquid ethane.

The techniques set forth in the documents and techniques mentioned above produce satisfactory results, but can be improved.

In prior techniques, the use of circular nozzles, such as circular mouthpieces, are known. A single circular nozzle is then directed to the centre of a first side of the circular sample. A second circular nozzle may be provided to cool the centre of the other side of the sample. A drawback of this (assembly of) single nozzle(s) is that the cooling capacity obtained is not sufficient for the edges of the circular sample. Increasing the jet speed to obtain higher cool rates at the edges of the sample leads to broken foils in the centre of the sample, and thus does not provide a solution to this problem. Increasing the diameter of the jet introduces interferences between the jet and reflected tangential streams over the whole grid area, and also does not provide a solution to this problem. A multiple jet approach is described in EP4067860A1, but potentially leads to stagnation points with decreased cooling rates. Thus, there still exists a desire to increase the cooling rate on the entire sample.

With this in mind, it is an object of the invention to provide a method of preparing a cryogenic sample by vitrification. In particular it is an object of the invention to provide improved cooling rates on a sample having a centre part and a peripheral part, where the centre part of the sample and the peripheral part of the sample experience equal cooling rates, without the drawbacks of the prior art methods mentioned above. In particular, it is an object of the invention that such a method should produce more consistent results as compared to prior-art techniques, as well as more consistent results over the entire sample.

These and other objects are achieved in a method of preparing a cryogenic sample as defined by claim 1. In the method as defined herein, the sample is subjected to rapid cooling using a cryogen. The method comprises the step of providing a sample, said sample comprising a specimen provided on a substantially planar specimen carrier. The method further comprises the step of providing at least one flow device for transporting cryogenic fluid to said sample, wherein said flow device comprises a first nozzle for directing a flow of cryogenic fluid onto said sample. Then, the sample is positioned next to said first nozzle and a flow of cryogenic fluid is provided out of said first nozzle in such a way that the sample is cryogenically cooled.

As defined herein, the first nozzle comprises a nozzle opening. The nozzle opening of the first nozzle has a width, as measured in a first direction, and a height, as measured in a second direction substantially perpendicular to said first direction, wherein said width is larger than said height. In other words, the nozzle opening as defined herein is non-circular. The nozzle opening as defined herein has improved tangential coolant velocity on the specimen carrier, compared to circular nozzles, in particular since the larger width to height establishes an essentially 2D flow profile over the sample, compared to the radial flow profile of the circular nozzle. The nozzle opening as defined herein provides jet freezing of a grid-like specimen carrier without breaking the foil and is fast enough to make an amorphous thin layer of ice, over the full diameter of the grid.

A flow that is relatively wide in width direction, but relatively narrow in height direction, has the main advantage that when the flat shaped jet hits the sample it splits into two sheets of liquid flow. One sheet moves into a first direction, and the other moves in a second, opposite direction. Due to the wide nature of the jet, hardly any spreading of the flow in the "width" direction is happening. As a result, the velocity of the fluid in the "height" direction over the sample surface is preserved over the full sample area, and this velocity can be larger compared to the radial flow exhibited by the circular jet.

With this, the object of the invention is achieved.

Below, an exemplary definition of a coordinate system associated with the present disclosure will be given, to further elucidate one or more characteristics of the method as disclosed herein.

A cartesian coordinate system can be associated with the nozzle, said coordinate system having the following three directions: the width of the nozzle opening (= x-direction), the height of the nozzle opening (= y-direction), and the flow direction coming from the nozzle (= z-direction). Said flow direction is substantially orthogonal with the width (x) and height (y) of the nozzle opening.

It is noted that with the width of the nozzle being larger than the height, an essentially 2D flow pattern is established. With this it is meant that the flow mainly changes as a function of the y-direction and the z-direction, but not a function of the x-direction. In other words, the flow pattern as viewed in an yz-plane is substantially equal for all x-coordinates. Hence, flow patterns and streamlines are a function of the height and the z-direction, and are thus f(y,z), but very much less so f(x).

Generally, the flow starts at the nozzle, with the jet or flow coming out of the nozzle, developing and then impinging onto a surface of the sample, where it impinges and bifurcates into two separate outwardly directed flows. The bifurcation includes one diverted flow going in a direction having a component in the positive y-direction (for example a downward direction), and one other diverted flow going in an opposite direction having a component in the negative y-direction (such as an upward direction).

The substantially planar sample can be positioned with respect to the nozzle in such a way that a first surface of the planar sample is orthogonal to the flow direction of liquid coolant coming from the nozzle. Then, the bifurcation includes a flow going in the positive y-direction and a flow going in the negative y-direction.

In case the width of the nozzle is aligned with level (i.e. horizontal), the height of the nozzle is aligned with the gravitational direction (i.e. vertical), and the sample is positioned orthogonal to the flow (as described in the paragraph above), then the flow will bifurcate in a flow going in an upward vertical direction (against the gravitational force) and a flow going in a downward vertical direction (in the direction of the gravitational force).

Further advantageous embodiments will be described below.

In an embodiment, the first nozzle comprises only a single nozzle opening. A single nozzle opening ensures a 2D flow and prevents local stagnation points (and prevents timing and synchronization issues that would be present when using multiple nozzle openings), and thus provides for more even cooling of the sample. The nozzle may thus consist of one nozzle opening.

In other embodiments, where multiple nozzle openings are present in a single nozzle, the nozzle opening having a width-to-height ratio greater than 1 provides for at least 80% of the flow towards the sample. For example, it is conceivable that one or more smaller, additional nozzle openings are provided for improving the cooling of the sample (for example for cooling specific hot-spots on the sample). However, the nozzle opening having a larger width compared to height as defined herein preferably accounts for the main source of cooling the sample, by providing at least 80%, preferably at least 90%, of the total flow coming from that nozzle.

Additional nozzles with respective nozzle openings may be provided as well, wherein each of these nozzles are directed to a single side of the sample. In an embodiment, at least one of the nozzles comprises a nozzle opening as defined herein, thus having a width that exceeds a height. This nozzle opening contributes for at least 80% of all the flow of all nozzles aimed at this respective single side of the sample. Additional nozzles may be provided at the other side of the sample, and may provide additional contribution of the flow. The at least 80% is counted for a single side only.

In an embodiment, the method comprises the step of directing only a single nozzle, having only a single nozzle opening, to one respective side of the sample. Indeed, this may mean that only a single side of the sample is cooled. In a preferred embodiment, however, a second nozzle may be provided that cools the other side of the sample. This second nozzle may be identical to the first nozzle, or may be embodied differently. The second nozzle may have only a single nozzle opening as well. The second single nozzle opening can be directed to the respective other side of the sample. Here, the method comprises the step of directing only a single flat shaped jet to one side of the sample (and, optionally, directing only a second single flat shaped jet to the other side of the sample).

In an embodiment, said width of the nozzle opening of the first nozzle exceeds a dimension of the specimen carrier, as measured in the first direction. This will ensure that a 2D flow is established over the entire sample.

In an embodiment, the specimen carrier comprises a grid-like holder structure (such as the TEM Autogrid^{®}), across which a membrane is spanned. The specimen carrier may comprise a relatively larger grid-ring element that is used to enclose and carry the grid-like holder. The grid-ring element can be used for easy manipulation of the sample, using tweezers or other grippers, for example. This TEM Autogrid^{®} having an autogrid ring (being an example of the grid-ring element) is well known to those skilled in the art.

In an embodiment, the width of the nozzle opening of the first nozzle can be made wider than the open grid area inside the grid-like holder structure. In this embodiment, the grid-ring element may be manipulated using a gripper device, such as, for example, a tweezer. With the nozzle opening having a width that exceeds a dimension of the specimen carrier, it is possible to cool the grid-ring element and/or the gripper device (such as the tweezer tips) directly with the flow as well. Direct cooling of those large heat capacities avoids reheating or slow cool down of the sample, and in particular in places that are close to the grid-ring element and/or gripper device.

In an embodiment, the width may be substantially equal to the dimension of said specimen carrier as measured in the first direction.

In an embodiment, the height of the nozzle opening of the first nozzle subceeds (i.e. is smaller than) a dimension of the specimen carrier, as measured in the second direction. In other words, the height of the nozzle opening is smaller than the dimension of the sample. With this the 2D flow over the sample is established.

In an embodiment, said specimen carrier comprises a central part and a peripheral part. The dimensions of the nozzle opening as disclosed herein are such that the central part and the peripheral part experience substantially equal cooling rates. Preferably, a central part of the nozzle opening is aimed at the central part of the specimen carrier, although different positions may lead to more improved cooling as well. The skilled person will be able to select an appropriate position. This way the central part and the peripheral part are cooled at substantially the same time. The specimen carrier may be substantially oval, circular, or square, for example.

In an embodiment, the nozzle opening of the first nozzle is substantially non-circular, and in particular said nozzle opening of the first nozzle is substantially rectangular. In a preferred embodiment, the nozzle opening of the first nozzle is rectangular, with the long edge extending in the width direction and the short edge extending in the height direction.

In an embodiment, said height is less than 50% of the dimension of the specimen carrier as measured in the second direction, in particular less than 40%, more in particular less than 30%. A lower height aids in the establishment of a 2D flow over the sample. Preferably, the height is more than 10% of the dimension of the specimen carrier, and more in particular approximately 15-25% of the dimension of the specimen carrier.

Looking at the width-to-height ratio for the nozzle opening of the first nozzle, this can be in between 2:1 and 10:1, and preferably at approximately 6:1. In the embodiment wherein the width is approximately equal to the dimension of the specimen carrier, and the height is approximately 15-25% of the dimension of the specimen carrier, the width-to-height ratio is in between 1:7 and 1:4. This ratio is beneficial in establishing a 2D flow over the sample.

As indicated before, the nozzle opening of the first nozzle can be positioned in such a way that the width dimension is positioned substantially level, i.e. parallel to the horizon.

A width of the nozzle opening of the first nozzle is, in an embodiment, at least 2.5 mm, and preferably at least 3.5 mm. This aligns with the dimensions of the standard sample carriers for use in cryogenic electron microscopy, which in a standard has a diameter of approximately 3 mm. With the ratios given above, the height of the nozzle opening of the first nozzle may lie in between 0.3 mm and 1 mm, and preferably at approximately 0.7 mm.

In an embodiment, the flow velocity out of said nozzle opening of the first nozzle is in between 1.0 m/s and 20 m/s, preferably in between 5.0 m/s and 11 m/s, such as 8 m/s.

In an embodiment, a flow rate of the cryogenic fluid out of said nozzle opening of the first nozzle is in between 2 ml/s and 80 ml/s, preferably in between 25 ml/s and 55 ml/s, such as 40 ml/s. It is noted that in general, the values given here are for the total flow on a single side of the sample. A flow on the other side of the sample may be provided as well, wherein the values mentioned in this paragraph hold true for that side as well.

The dimensions of the nozzle opening may be adapted to the desired flow velocity and the desired flow rate, where a larger area allows a higher flow rate (and thus cooling rates) at relatively lower flow velocities (and thus less chance of damage to the sample).

In an embodiment, said flow device comprises a second nozzle, positioned at a distance from said first nozzle, and the method comprises the further steps of positioning the sample in between said first nozzle and said second nozzle; and providing a flow of cryogenic fluid through the first nozzle and through the second nozzle to cryogenically cool the sample from two opposing sides. This allows the sample to be cooled from two opposing sides, which allows higher cooling rates but also protects the relatively fragile sample as now opposing forces are acting on the sample.

It is noted that the nozzle opening of the second nozzle may be embodied as described with respect to the nozzle opening of the first nozzle. As indicated, the nozzle openings may be different. In an embodiment, both said nozzle opening of said second nozzle and said nozzle opening of said first nozzle have a width that is larger than a height. In a further embodiment, the two nozzle openings are substantially identical.

In an embodiment, said flow device comprises a plunger, wherein:
- Said plunger comprises at least one flow channel having an inlet provided on an underside of the plunger, wherein downstream of said inlet the flow channel is provided with the first nozzle, and wherein the plunger comprises a gap for positioning said sample in a topside of the plunger;
- A bath of cryogenic fluid is provided beneath said plunger;
- Said sample is inserted into said gap using a tool that applies downward pressure on said plunger, thereby at least partially submerging the plunger and causing cryogenic fluid to flow out of said first nozzle.

In this embodiment, the pumping of fluid is established by the downward movement of the plunger.

In other embodiments, the flow device may comprise a pumping mechanism for providing liquid coolant to the nozzle. Such pumping mechanisms are known per se to those skilled in the art.

According to an aspect, an apparatus for preparing a cryogenic sample is provided, whereby the sample is subjected to rapid cooling using a cryogen, said apparatus comprising at least one flow device for transporting cryogenic fluid to said sample, wherein said flow device comprises a first nozzle for directing a flow of cryogenic fluid onto said sample.

As described herein, the nozzle opening of the first nozzle has a width, as measured in a first direction, and a height, as measured in a second direction substantially perpendicular to said first direction, wherein said width is larger than said height.

Advantages of such a device have been elucidated already with respect to the method as described herein.

The apparatus may, in an embodiment, comprise an applicator device for applying a specimen to a specimen carrier. The applicator device may be arranged for applying a specimen contained in a liquid medium to said specimen carrier.

The apparatus may, in an embodiment, comprise a blotting device for removing excess liquid from said specimen carrier.

The apparatus may be arranged for performing the following steps in subsequent order: applying a specimen to a specimen carrier using the applicator device, blotting excess liquid from said specimen carrier using the blotting device, and thereafter vitrifying the specimen on the specimen carrier using the flow device.

Some general principles and embodiments in view of the use of two nozzles will be described below.

The flow of cryogenic fluid applied from a first nozzle and the flow of cryogenic fluid applied from a second nozzle is substantially equal. Here, two nozzles can be used to deliver an equal flow of cryogenic fluid to a first side of the sample (i.e. a front of the sample) and to a second side of the sample (i.e. a backside of the sample). The front of the sample, here, is the side where the specimen is applied to the specimen carrier.

The flow of cryogenic fluid applied from a first nozzle may be reduced after a given time interval, such that the flow of cryogenic fluid from said first nozzle is different to that applied from a flow coming from a second nozzle. This produces deliberate asymmetry/disparity as regards the cooling of the sample's frontside and backside. This reduces flow-interferences and may reduce costs as well. The frontside may be cooled longer, in an embodiment. In another embodiment the backside is cooled longer. The backside of the sample may require more cooling because there the mesh grid is positioned, and also most of the bulky carrier volume is on the backside, see Fig. 1B.

For completeness, it should be realized that the cryogenic fluid that is flowing from the nozzles may be a liquid or a (dry) gas/vapor, and it may be the same or different for each nozzle; in general, liquids tend to be preferable over gas-phase fluids, inter alia because of the greater heat capacity of liquids, and the relative ease with which they can be stored and pumped. It should also be noted that, if desired, one or more of the nozzle openings may contain a mesh (sieve) or other form of flowpath sub-division, e.g. so as to achieve laminar flow and/or a particular flow pattern. As alluded to above, this mesh need not be the same for both nozzles.

In a set-up according to the present invention, the cryogenic fluid may, for example, be pumped through the employed nozzle using one or more (electric) pumps; these may be switched on/off as required, and/or a valve system can be used to open/close the flow in the conduits at will. Such a set-up allows, for example, the flow rate and/or flow duration in one of the conduits to be different to that in the other conduit.

In an alternative embodiment, use can be made of a "manual pumping" set-up in which said nozzle (or nozzles) is (are) provided in a plunger, as described above.

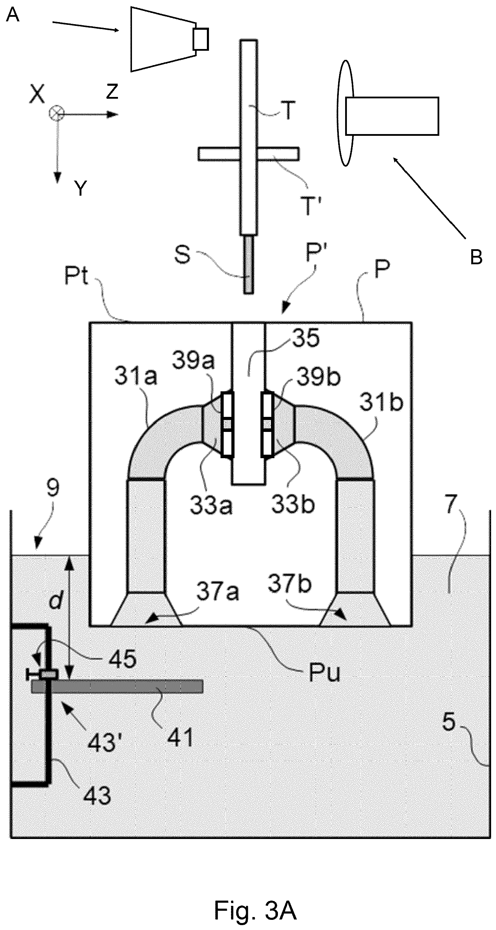

Such a set-up effectively makes use of a fluid displacement mechanism similar to that used in a piston (whereby the plunger plays the role of the piston head [with overflow conduits], and the cryogenic bath is contained in the piston tube). It is similar to a set-up described in the aforementioned US 2017/0169991 A1. Modifications as described in the aforementioned US 2019/0180974 may be incorporated as well. These modifications allow to produce a different flow of cryogenic fluid from each of the nozzles. One way to achieve this is use a shutter to close off a first of said conduits - connected to one of said nozzles- after a given time interval. A convenient way to perform such delayed shuttering is using a construction wherein, as the plunger is submerged into said bath, a first of said apertures, connected to said first conduit, engages with a lid (cover; blanking member) disposed at a selected distance d below a surface of said bath, which lid then co-moves with the plunger so as to keep said first aperture closed. Such a scenario is depicted in Figures 3A-3C, for example. If the plunger is submerged with a vertical velocity v, then the distance d can be selected so as to engage the shutter at a given time t = d/v (e.g. in a range 10-100 milliseconds (ms), such as 40-60 milliseconds, for instance) after flow/depression of the plunger commences. The shutter itself may, for example, be:
- Embodied to be intrinsically buoyant in the employed cryogen bath, and/or be caused to be artificially "buoyant", e.g. by biasing it upward using a spring mechanism, for instance. In this way, the shutter will revert/relax back upward (to a default/initial position) when the plunger disengages therefrom (on its upward/return "stroke").
- Be attached to a guide/rail that constrains its motion to a vertical path.
- Be curtailed from rising above a certain level (at depth d) using an adjustable stop.

In an embodiment as described in the previous paragraph, it should be noted that:
- The "tool" in question may, for example, be a tweezers or pliers, which can be used to grasp the specimen by its edge. Such a tool may, for example, contain a feature such as a protrusion, burl or local enlargement that engages with the top of the plunger (or some structure thereon) in order to convert insertive motion of the tool (in the slot) into (downward) co-motion of the plunger.
- The plunger may initially (shallowly) float in the cryogen bath, or may alternatively hang over the bath.
- Although the illustrations in Figures 3A-3C depict a scenario in which the sample plane is oriented vertically and the cryogenic fluid flows from the nozzles horizontally, this does not necessarily have to be the case. Instead, one could, for example, construct a set-up in which the sample plane is oriented horizontally, the nozzles are arranged above and below it, and the cryogenic fluid flows from the nozzles vertically. In both scenarios, it is desirable to have the (cumulative) lengths of both conduits substantially equal, so as to ensure substantially synchronous issuance of cryogenic fluid from both mouthpieces when the plunger is suitably submerged.
- The plunger may be made of various materials, as long as they are compatible (e.g. in terms of brittleness) with use at cryogenic temperatures. Examples include stainless steel, titanium and (certain) ceramics, for instance.

For substantially planar samples with oppositely-located major surfaces - such as a grid/membrane as referred to above, or a flake / piece of a wafer, for example - the following considerations provide (non-binding) guidance when applying the present invention:
- One can associate a terminal/extremal/circumferential perimeter with each of the nozzles.
- These perimeters will ideally be centred on a common axis.
- A nozzle with a single nozzle opening can be used, and this nozzle opening may be aligned with this common axis.
- This common axis will intersect the plane of the (planar) sample at an (approximately) normal/perpendicular angle. The common axis will also ideally pass through a geometric center/centroid/barycenter of the sample.
- Nominally, the sample will be positioned so that it is equidistant from the mouthpieces (or - in the case of specimen carrier comprising a membrane spanned on a grid - so that the membrane is equidistant from the mouthpieces). If the sample/membrane is closer to a particular nozzle, then one can still ensure simultaneous commencement of flowing of the frontside and backside of the sample by, for example:
- Slightly delaying pumping of cryogen into the conduit connected to that particular nozzle; or/and
- Embodying the conduit connected to that particular mouthpiece to be slightly longer than that connected to the other mouthpiece.

With respect to the cryogen bath into which the sample is plunged, there are various possible choices as regards the cryogen used. For example, various practitioners report using a liquid ethane/propane mix. Liquid nitrogen may be used as well. In a particular embodiment of the invention, the cryogen in the bath comprises liquid ethane (without substantial quantities of other constituents) at a temperature in the range -160 ºC to -183 ºC. When vitrifying a sample by plunge-cooling it, one can tend to adhere to a rule of "the colder the better". However, at temperatures below ca. -183 ºC, it was observed that liquid ethane can tend to become so viscous as to possibly impede the plunging process, e.g. by clinging to the sample carrier. Temperatures above this level (e.g. -175 ºC) are therefore generally preferable.

In order to achieve satisfactory vitrification of the sample, its exposure to cryogenic fluid from the mouthpieces of the current invention should preferably be relatively sudden. The use of a first nozzle having an elongated nozzle opening aids in the sudden exposure of cryogenic fluid over an increased area of the entire sample. Exposure to the cryogenic fluid from the nozzle can be more gradual, or even more extended, but it was found that this increases the risk that the sample will (at least partially) freeze into crystalline form rather than solidifying amorphously - which is undesirable. The nozzle opening can be tuned/optimized for establishing a desired flow in dependence on various factors, such as the thickness of (the grid/membrane of) the sample, the temperature of the employed cryogenic fluid, the pressure/flow pattern produced by the nozzle openings of the mouthpieces, etc. As a non-binding example, the uninterrupted flow from the nozzle opening may have a nominal duration in a range of 5-200 milliseconds, such as approximately 100-120 milliseconds, for instance; in the case of a sample comprising a holey membrane on a grid, a somewhat longer duration will generally help to ensure that, in addition to producing vitrification of the aqueous film in the holey membrane, residual heat is removed to a satisfactory extent from the grid (and any associated supporting member), so as to prevent unwanted "reheating" of the membrane by heat leakage from the grid, or prevent unwanted "reheating" of the sample carrier by heat leakage from a mechanical support. After vitrification occurs, the aqueous film temperature will preferably remain below about -145 °C, to prevent unwanted formation of crystalline ice. Those skilled in the art will be able to choose the flow duration, tailored to the set-up and parameters pertaining to a given embodiment of the invention.

It is noted that in an embodiment a combination of jetting and plunging takes place. Jetting may start before the sample is submerged into liquid coolant. Once the sample is submerged into the liquid coolant, the jetting may continue for a while to ensure sufficient cooling of the sample. In an embodiment, the jetting starts and the sample is submerged/surrounded by liquid coolant within 20 milliseconds. The jetting may still continue for the total time period mentioned in the paragraph above. Total jetting time may thus be 100-120 milliseconds, with the sample being fully submerged after 20 milliseconds. The plunging aids in cooling the bulky grid and mechanical tool (such as the tweezers), for example.

The invention will now be elucidated in more detail on the basis of exemplary embodiments and the accompanying schematic drawings, in which:
Figures 1A-1B illustrate (a particular embodiment of) a common sample structure used in vitrification procedures;
Figure 2 shows sample damage that can result from application of a prior-art vitrification procedure;
Figures 3A-3C render a longitudinal cross-sectional view of aspects of an embodiment of an apparatus according to the present disclosure;
Figure 4 renders a longitudinal cross-sectional view of a charged particle microscope that lends itself to use with the method as disclosed herein.
Figures 5A-5D schematically show embodiments of nozzles having a nozzle opening as defined herein;
Figure 6 shows a nozzle having a nozzle opening aligned with a sample to be vitrified;
Figure 7a and 7b show a front view and side view, respectively, of flow coming out of the nozzle opening, and onto the sample;
Figure 7c shows a numerical simulation of the flow out of the nozzle opening and onto the sample;
Figure 8 shows a comparison of the method as disclosed herein to one prior art method;
Figure 9 shows another embodiment of an apparatus as disclosed herein.

In the Figures, where pertinent, corresponding parts may be indicated using corresponding reference symbols. It should be noted that, in general, the Figures are not to scale.

### Background Example

Figure 1A renders detailed (magnified) views of aspects of a particular embodiment of a specimen carrier S that can be used in conjunction with the present invention. This particular type of specimen carrier S comprises what is often referred to as a "grid" G. It comprises a circular ring 21a of wire (e.g. comprising Cu or Ni, for instance), the diameter of the ring typically being of the order of about 3 mm and the diameter of the wire typically being of the order of about 20-100 µm. Attached within the ring 21a are straight wire portions 21b, which are (in this case) arranged to form an orthogonal grid pattern, thus defining a matrix-like array of (substantially square) apertures (openings/holes/windows) 23. The middle portion of Figure 1A shows a transverse cross-sectional view of the upper portion of the Figure, taken along the diameter B-B'. It shows that the grid G has a substantially planar (plate-like) form, with opposed first (S1) and second (S2) "faces" substantially parallel to one another. As here depicted, a membrane 25 has been spanned upon the first face S1 (and, optionally, affixed to the wires 21b, e.g. using an adhesive or by molten bonding). This membrane 25 may, for example, comprise a carbonaceous material such as nylon or graphene, and will typically have a thickness (in the Y direction) ranging from about 0.3 nm to hundreds of nm. The membrane 25 contains a distribution of perforations 27, which are clearly visible in the detailed view at the bottom of the Figure. These perforations 27 typically have a diameter (parallel to the XZ plane) in a range of ca. 1.2 - 3.5 µm (e.g. ~ 2 µm). In essence, the grid G acts as a scaffold for the membrane 25, and the membrane 25 in turn acts as a supporting structure for the perforations 27 (so that it is sometimes referred to as a "holey carbon support"). It is within the perforations 27 that the ultimate "specimen" is to be provided and supported - in the form of a thin film 29 of aqueous liquid (comprising one or more study specimens suspended therein) that is spanned across each given perforation 27, remaining in place (inter alia) by virtue of surface tension effects. It should be noted that structures as depicted in Figure 1A (grid G + perforated membrane 25, 27) and as described above are commercially available, e.g. from firms such as Ted Pella, Inc., of Redding, California, USA. It is also possible to purchase (a variety of) pre-manufactured holey carbon films (corresponding to the perforated membrane 25, 27), e.g. from firms such as Quantifoil Micro Tools GmbH, Jena, Germany. Inter alia in the context of the present invention, the illustrated structure can be regarded as having a "backside" Sb and a "frontside" Sf.

A film 29 of aqueous liquid can be provided in the various perforations 27 of the membrane 25 using methods well described in technical literature and known to the skilled artisan. In one such known method, a sheet of blotting paper (not depicted) is pressed against the outer/lower surface of membrane 25, is then moistened with the aqueous liquid in question, and is subsequently removed (e.g. peeled off) of the membrane 25 - causing (most of) the apertures 27 to be endowed with a (mini-)film 29 of the aqueous liquid, which is spanned within them by surface tension effects. A method of this type is described, for example, in the article Electron Microscopy of frozen water and aqueous solutions by J. Dubochet et al. in Journal of Microscopy, vol. 128, pt 3, December 1982, pp. 219-237, and will not receive further attention here. Reference is also made to an alternative method that is set forth in US 9,772,265 (with the same inventor/assignee as the present application and incorporated herein by reference).

Now turning to Fig. 1B, an example of an EM-grid specimen carrier S with a mechanical contour 31 for improved handling is shown. Here, the specimen carrier S as described in Figure 1A is enclosed in a first contour body 31 that is substantially circular and has an L-shaped cross-sectional area. This first contour body 31 is also referred to as clip ring 31, and is known to those skilled in the art. The specimen carrier S is provided within a recess of said mechanical contour 31, abutting a recess surface of said mechanical contour 31. A fixating element 33, in the form of a c-shaped clip 33 (also referred to as c-clip 33) holds the specimen carrier S firmly in place in the recess of the mechanical contour 31. A thin film 29 of aqueous liquid, comprising the specimen to be studied, is provided on the backside or frontside of the grid S (here shown in an exaggerated way, drawing is not to scale).

The specimen carrier with the specimen provided thereon is often referred to as sample.

Turning now to Figure 2, this shows a particular sample of a type such as that illustrated in Figure 1A and 1B, after vitrification using the method set forth in the aforementioned US 2017/0169991 A1 (same flush applied to backside and frontside of sample). The light gray squares/cells are undamaged with successful vitrification procedure, whereas the white squares/cells are damaged where membrane breakage/de-lamination has occurred (to a greater or lesser extent). The dark/mottled squares/cells correspond to locations where vitrification happened but with too thick ice (to a greater or lesser extent). In the current situation, it is seen that of the order of ca. 25% of the squares/cells are sub-optimal. As set forth above, closer examination of the sample (not evident in the current Figure) reveals that the damaged squares/cells have been detached with a prevalent backside-to-frontside directionality.

### Embodiment 1

Figures 3A-3C show aspects of an embodiment of a method and apparatus according to the present invention. Starting with Figure 3A, this shows an apparatus for preparing a sample for study in a cryogenic charged particle microscope. The apparatus as depicted comprises:
- An applicator device A for applying a specimen to a specimen carrier;
- A blotting device B for removing excess liquid from the specimen carrier after applying the specimen to the specimen carrier; and
- A cryogenic cooling device for vitrifying the specimen provided on the sample carrier.

A tool T is provided for moving the sample in the Y-direction past these applicator device, blotting device and cooling device, respectively.

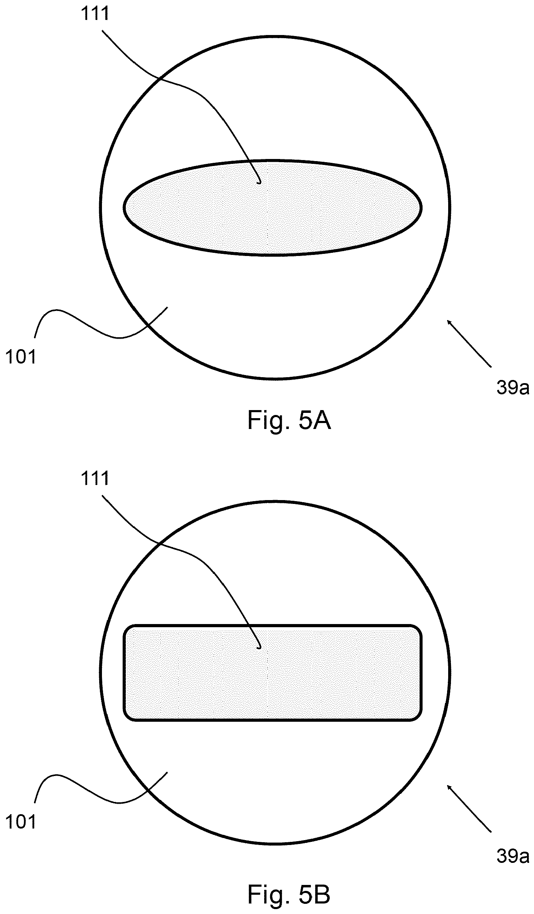

The cooling device comprises a pair of conduits 31a, 31b for transporting cryogenic fluid. Each of these conduits 31a, 31b has two extremal orifices, these being (respectively):
- (Lower) entrance orifices 37a, 37b, through which cryogenic fluid can enter the conduits 31a, 31b;
- (Upper) mouthpieces (exit orifices) 33a, 33b, through which cryogenic fluid can emerge from the conduits 31a, 31b. These mouthpieces 33a, 33b face each other across an intervening gap 35. The mouthpieces 33a, 33b are provided with nozzle plates 39a, 39b. Nozzle plate 39a may be provided with a nozzle opening as defined herein, and which will be explained in more detail with respect to Fig. 5A-5D. Nozzle plate 39b may also be provided with a nozzle opening as defined herein. It should be noted that in the embodiment shown, there are two nozzles, which are positioned in such a way as to face each other. An embodiment in which only a single nozzle is present is conceivable as well.

It should be noted that:
- For convenience, the various components 31a, 31b, 33a, 33b, 35, 37a, 37b are here depicted as residing in a body P, which may serve as a matrix/structure to keep them in place; for example, body P might be a plug/block of metal, ceramic or epoxy in which these various components have been created by casting, molding, machining or 3D-printing, for instance. However, this does not necessarily have to be the case, and the various components could instead be (quasi) free-standing structures.
- The orifices 37a, 37b; 33a, 33b are here depicted as being flared, but that does not necessarily have to be the case. In an embodiment, the orifices are substantially parallel, to provide for parallel flow channels that run toward the respective nozzle opening.
- The gap 35 is depicted as being of uniform width, but it could alternatively be tapered, for example. It should ideally be relatively narrow (in the Z direction), so as improve initial flow synchronization and symmetry.

Also depicted in Figure 3A is a tool T (such as a tweezers, pincers, pliers, clamp, robot arm, etc.) that can be used to grasp and manipulate a specimen carrier S, e.g. by gripping it along its edge, such as the mechanical contour 31 shown in Figure 1B. This tool T can be used to transfer the specimen carrier from the application device A, past the blotting device B, after which the tool T can be used to position sample S in the gap 35 and between the mouthpieces 33a, 33b.

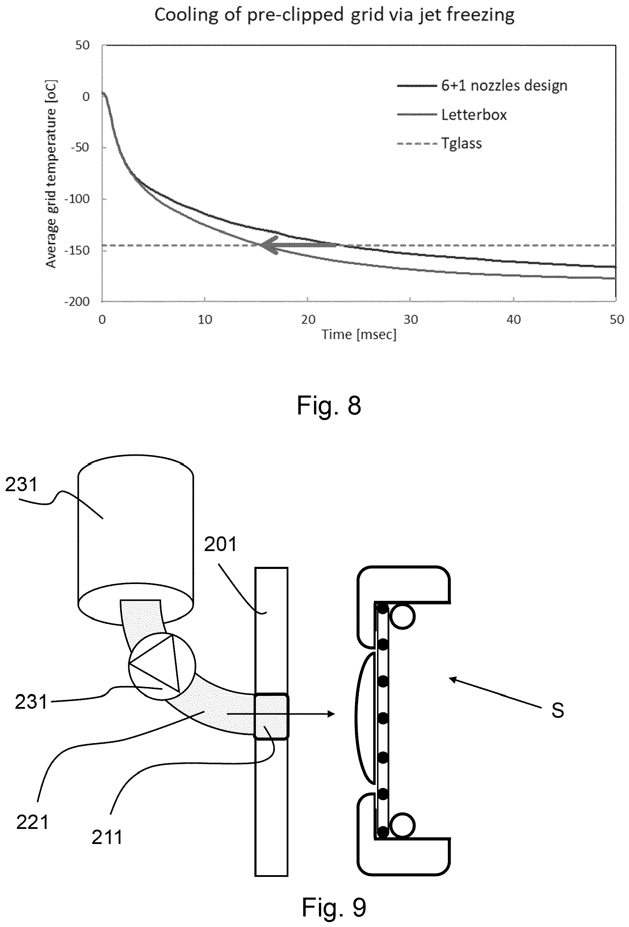

As already set forth above, one way to supply cryogenic fluid to the entrance orifices 37a, 37b is to simply connect them to (an electrical) cryogen pump (and associated cryogen reservoir) using suitable tubing/piping; one can then pump cryogen through the conduits 31a, 31b and out of the mouthpieces 33a, 33b so as to flush/shower (a sample S located in) the gap 35 with cryogenic fluid. This embodiment is shown in Fig. 9, where a sample is provided in front of nozzle 201, having nozzle opening 211, and wherein (schematically) a reservoir 231 of cryogenic fluid is connected to the nozzle 201 by means of a conduit 221. A pump 231 is provided to pump liquid from the reservoir 231 to the nozzle 211, and onto the sample S.

However, in the embodiment shown in Fig. 3A-3C, use is instead made of a (manual) piston action to move cryogenic fluid through the conduits 31a, 31b. To this end, the body P is embodied as a plunger, which has an underside Pu (in which the entrance orifices 37a, 37b are located) and a topside Pt (through which it is possible to access gap 35). This plunger P can then, for example, be (partially) plunged/dipped into a container (tube, vessel) 5 of cryogen 7; as the plunger's underside Pu moves beneath the surface 9, cryogen 7 will be (progressively) forced through the entrance orifices 37a, 37b, though the conduits 31a, 31b and out of the nozzles 39a, 39b (see the progression from Figure 3A to 3B to 3C, which illustrate part of this motion). Note in Figure 3A that, prior to insertion of tool T / initiation of the plunging procedure, the conduits 31a, 31b have been primed/pre-filled with cryogen 7, e.g. as a result of pre-syphoning and/or capillary action from a previous plunging iteration. In this way, one ensures that a supply of cryogen is waiting in close proximity to the inserted position of the sample S, ready to gush out almost instantaneously, and thus lowering the risk of an unsynchronized flush/flow from both sides of the sample S.

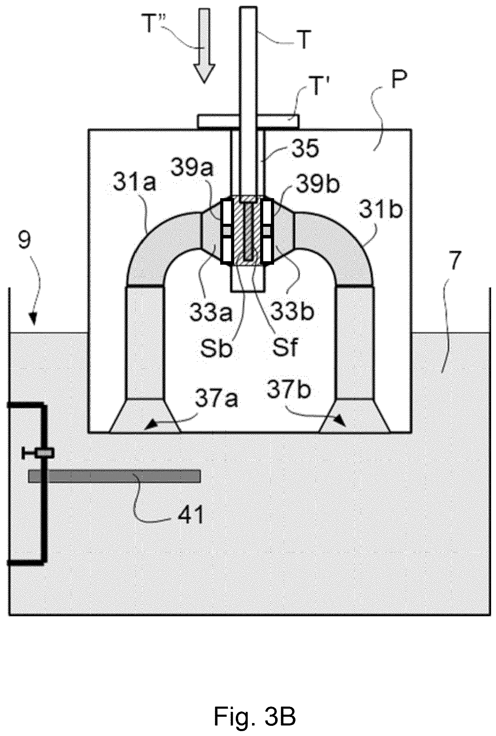

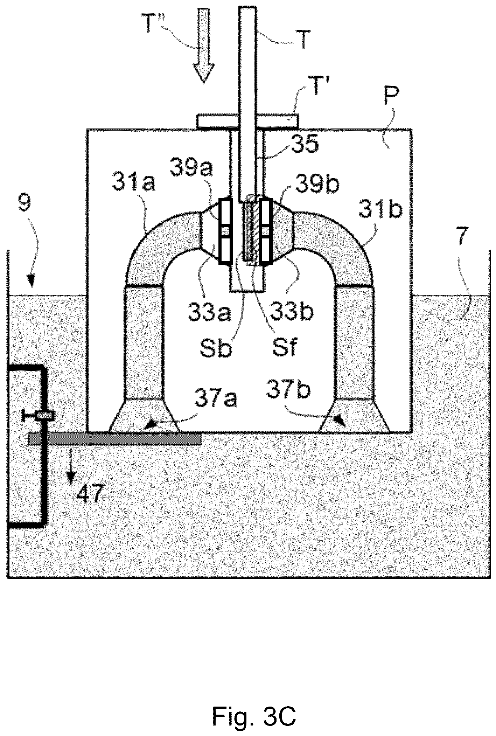

To produce the desired plunging motion, the depicted set-up uses the tool T to apply downward force to the plunger P - although this does not necessarily have to be the case, and one could instead push the plunger P downward by other means. As shown in Figures 3B and 3C, the tool T has a protrusion/lug T' that engages with a reciprocal area/part P' of the topside Pt of plunger P, allowing downward force on tool T to transfer downward momentum to plunger P: see the illustrative downward arrow T" in Figures 3B, 3C. Moreover, the protrusion T' can (if so desired) be exploited to ensure that the sample S is inserted to an optimal depth in gap 35 (ideally substantially symmetrically between mouthpieces 33a, 33b) and can also be used to provide correct lateral positioning of the sample S in the gap 35 (once again, ideally with the (vitreous film of the) sample equidistant from mouthpieces 33a, 33b).

In a non-limiting example of a set-up such as that depicted here, the following illustrative (and approximate) values may apply:
- sample S comprises a planar grid of diameter 3 mm and thickness 0.4 mm.
- Diameter of the nozzles 39a, 39b: 3-4 mm.
- Diameter of conduits 31a, 31b: 2.5 mm.
- Separation of mouthpieces 31a, 31b / width of gap 35: 1 mm.
- Velocity of flow out of nozzle opening 31a, 31b: ~1-20 m/s.
- Flow rate out of nozzle opening 31a, 31b: 2-80 ml/s

The skilled artisan will be able to tailor his own values to the requirements of a given situation, and to tailor the dimensions of the nozzle openings in view of the above flow velocity and flow rate. The dimensions of the nozzle openings will also be discussed with respect to Figures 5A-5D.

In the embodiment shown in Fig. 3A-3D, the depicted apparatus has been configured such that the flow of cryogenic fluid applied from (left) mouthpiece 33a is different to that applied from (right) mouthpiece 33b - more specifically, to cause the flow from mouthpiece 33a to be of shorter duration than that from mouthpiece 33b. To this end, use is made of a shuttering mechanism (41, 43, 45) to close off (left) conduit 31a (which is connected to said (left) mouthpiece 33a) after elapse of a given time interval. More specifically, this shuttering mechanism comprises:
- A lid (cover/blanker) 41, disposed at a selected nominal distance d below the surface 9 of the cryogen bath.
- A rail/guide 43, which permits and guides motion of the lid 41 substantially parallel to the Y axis. To this end, the lid 43 may comprise an aperture 43' (or other suitable structure, such as a clasp or runner, for example) that cooperates with rail 43 so as to allow relative motion of the two.
- An adjustable stop (such as a screw-locked sliding collar, for instance) that prevents upward motion of lid 41 beyond a certain point (at depth d).

As set forth above, the lid 41 may be naturally buoyant in cryogen 7 (e.g. because it is hollow) and/or may be biased upward using a spring, piston or magnetic arrangement, for example. In this way, lid 41 can co-move downward when it is engaged by plunger P, but will return/relax back upward when plunger P is disengaged therefrom. With particular reference to the individual Figures:
- In Figure 3B, such engagement has not yet occurred. The plunger P is moving downward through cryogen 7, forcefully introducing (more) cryogen into the conduits 31a, 31b. The associated pressure head causes cryogen to flow from both nozzle openings 39a, 39b, as schematically illustrated in Figure 3A by the hatched area filling the space between the mouthpieces 31a, 31b.
- In Figure 3C, the plunger P has engaged with lid 41, and the plunger P and lid 41 are co-moving downward (see arrow 47). Because of its size/positioning, the lid 41 only engages with left entrance orifice 37a, blocking/capping it and preventing flow of cryogen into it; on the other hand, right entrance orifice 37b is not impeded in this way. Consequently, the flow of cryogen from left mouthpiece 33a ceases, whereas the flow from right mouthpiece 33b continues. Note that the hatched area (flow) is now only coming from right mouthpiece 33b.

As set forth above, the skilled artisan can choose the distance d and/or the downward velocity of plunger P so as to cause this termination of the flow from left mouthpiece 33a at a pre-selected time interval after commencement of flowing. This time interval may, for example, be of the order of 10-200 milliseconds.

It is noted that the use of the shuttering mechanism 41 as depicted in Fig. 3A-3C is entirely optional. Equal flow on both sides of the sample S is conceivable as well.

It is noted that the plunger device as described herein can be effectively used as a jet freezing device. One further advantage of the plunger device as described herein is that in a submerged position of the plunger in the cryogenic bath, it becomes possible to use the device as described herein as a plunge freezing device as well. To this end, the tool may be simply entered into the plunger device for establishing plunge freezing. In an alternative embodiment, the cryogenic bath may be provided with a pumping device to establish forced flow through the conduits of the plunger, so that jet freezing may occur without actually moving the plunger into the bath.

### Embodiment 2

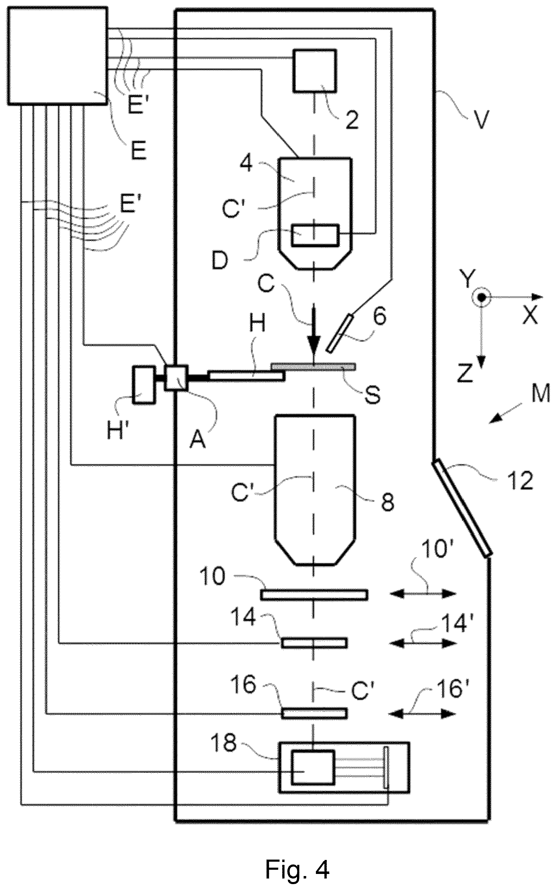

Figure 4 is a highly schematic depiction of an embodiment of a CPM which can be used to examine a sample prepared in accordance with the present invention; more specifically, it shows an embodiment of a transmission-type microscope M, which, in this case, is a TEM/STEM (though, in the context of the current invention, it could just as validly be an ion-based microscope, for example). In the Figure, within a vacuum enclosure V, an electron source 2 (such as a Schottky emitter, for example) produces a beam C of electrons that traverse an electron-optical illuminator 4, serving to direct/focus them onto a chosen part of a sample S (which may, for example, be (locally) thinned/planarized). This illuminator 4 has an electron-optical axis C', and will generally comprise a variety of electrostatic / magnetic lenses, (scan) deflector(s) D, correctors (such as stigmators), etc.; typically, it can also comprise a condenser system (the whole of item 4 is sometimes referred to as "a condenser system").

The sample S is held on a sample holder H that can be positioned in multiple degrees of freedom by a positioning system / stage A; for example, the sample holder H may comprise a finger that can be moved (inter alia) in the XY plane (see the depicted Cartesian coordinate system; typically, motion parallel to Z and (at least) tilt about X/Y will also be possible). Such movement allows different parts of the sample S to be irradiated / imaged / inspected by the electron beam traveling along axis C' (in the Z direction) (and/or allows scanning motion to be performed, as an alternative to beam scanning). A cooling device H' is in intimate thermal contact with the sample holder H, and is capable of maintaining the latter at cryogenic temperatures, e.g. using a vat of cryogenic coolant to achieve and maintain a desired low temperature.

The (focused) electron beam C traveling along axis C' will interact with the sample S in such a manner as to cause various types of "stimulated" radiation to emanate from the sample S, including (for example) secondary electrons, backscattered electrons, X-rays and optical radiation (cathodoluminescence). If desired, one or more of these radiation types can be detected with the aid of analysis device 6, which might be a combined scintillator/photomultiplier or EDX (Energy-Dispersive X-Ray Spectroscopy) module, for instance; in such a case, an image could be constructed using basically the same principle as in a SEM. However, alternatively or supplementally, one can study electrons that traverse (pass through) the sample S, emerge (emanate) from it and continue to propagate (substantially, though generally with some deflection/scattering) along axis C'. Such a transmitted electron flux enters an imaging system (combined objective/projection lens) 8, which will generally comprise a variety of electrostatic / magnetic lenses, deflectors, correctors (such as stigmators), etc. In normal (non-scanning) TEM mode, this imaging system 8 can focus the transmitted electron flux onto a fluorescent screen 10, which, if desired, can be retracted/withdrawn (as schematically indicated by arrows 10') so as to get it out of the way of axis C'. An image (or diffractogram) of (part of ) the sample S will be formed by imaging system 8 on screen 10, and this may be viewed through viewing port 12 located in a suitable part of a wall of enclosure V. The retraction mechanism for screen 10 may, for example, be mechanical and/or electrical in nature, and is not depicted here.

As an alternative to viewing an image on screen 10, one can instead make use of the fact that the depth of focus of the electron flux emerging from imaging system 8 is generally quite large (e.g. of the order of 1 meter). Consequently, various other types of analysis apparatus can be used downstream of screen 10, such as:
- TEM camera 14. At camera 14, the electron flux can form a static image (or diffractogram) that can be processed by controller E and displayed on a display device (not depicted), such as a flat panel display, for example. When not required, camera 14 can be retracted/withdrawn (as schematically indicated by arrows 14') so as to get it out of the way of axis C'.
- STEM imager (camera) 16. An output from imager 16 can be recorded as a function of (X,Y) scanning position of the beam C on the sample S, and an image can be constructed that is a "map" of output from imager 16 as a function of X,Y. Imager 16 can, for example, comprise a single pixel with a diameter of e.g. 20 mm, as opposed to the matrix of pixels characteristically present in camera 14. Moreover, imager 16 will generally have a much higher acquisition rate (e.g. 106 points per second) than camera 14 (e.g. 102 images per second). Once again, when not required, imager 16 can be retracted/withdrawn (as schematically indicated by arrows 16') so as to get it out of the way of axis C' (although such retraction would not be a necessity in the case of a donut-shaped annular dark field imager 16, for example; in such an imager, a central hole would allow beam passage when the imager was not in use).
- As an alternative to imaging using camera 14 or imager 16, one can also invoke spectroscopic apparatus 18, which could be an EELS module, for example (EELS = Electron Energy-Loss Spectroscopy).

It should be noted that the order/location of items 14, 16 and 18 is not strict, and many possible variations are conceivable. For example, spectroscopic apparatus 18 can also be integrated into the imaging system 8.

Note that the controller (computer processor) E is connected to various illustrated components via control lines (buses) E'. This controller E can provide a variety of functions, such as synchronizing actions, providing setpoints, processing signals, performing calculations, and displaying messages/information on a display device (not depicted). Needless to say, the (schematically depicted) controller E may be (partially) inside or outside the enclosure V, and may have a unitary or composite structure, as desired. The skilled artisan will understand that the interior of the enclosure V does not have to be kept at a strict vacuum; for example, in a so-called "Environmental TEM/STEM", a background atmosphere of a given gas is deliberately introduced/maintained within the enclosure V. The skilled artisan will also understand that, in practice, it may be advantageous to confine the volume of enclosure V so that, where possible, it closely embraces the axis C', taking the form of a small tube (e.g. of the order of 1 cm in diameter) through which the employed electron beam passes, but widening out to accommodate structures such as the source 2, sample holder H, screen 10, camera 14, imager 16, spectroscopic apparatus 18, etc.

The sample S shown in Figure 4 can, for example, be a sample that has undergone a vitrification procedure according to the present invention. Such a sample can be maintained at cryogenic temperatures while it is in the CPM M (and also while it is being transported/stored) thanks to the cooling device H'. To this end, one can, for example, employ an embodiment such as the following:
- The cooling device H' comprises a dewar/flask that is intimately thermally connected (e.g. via a copper rod and/or braid) to holder H, and that can be filled with a cryogen.
- The composite structure H+H' can be inserted into / removed from the CPM M, whereby it can be seated into / clamped by a receiver portion of positioning system A.

Refer, for example, to the set-up discussed in United States Patent Application US 2012/0112064 A1, and similar such set-ups which are known per se to those skilled in the art.

### Further embodiments

Now turning to figures 5A-5D, embodiments of the nozzle openings as defined herein will be described.

Figure 5A shows an embodiment of a mouthpiece 39a, wherein the mouthpiece comprises a nozzle plate 101 with a single central nozzle opening 111, wherein a width of the nozzle opening is larger compared to a height of the nozzle opening. Here, the nozzle opening is substantially elliptical. The nozzle opening 111 is provided on a central axis of the nozzle plate 101, so that it may be aimed at a central location of the sample S. The width-to-height ratio is approximately 3:1.

Figure 5B shows an embodiment of a mouthpiece 39a, wherein the mouthpiece comprises a nozzle plate 101 with a single central nozzle opening 111, wherein a width of the nozzle opening is larger compared to a height of the nozzle opening. Here, the nozzle opening 111 is substantially rectangular (with rounded edges). The nozzle opening is provided on a central axis of the nozzle plate 101, so that it may be aimed at a central location of the sample S. The width-to-height ratio is approximately 3:1, similar to Fig. 5A.

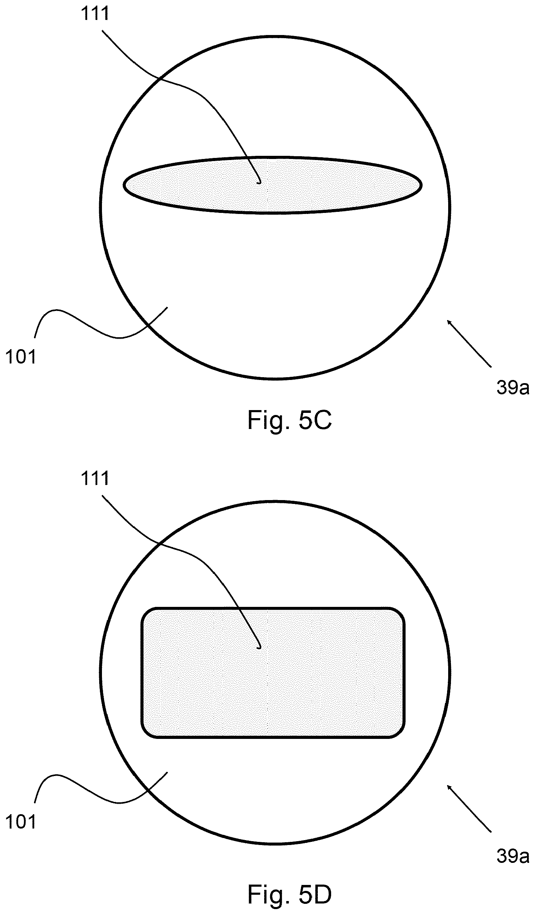

Figure 5C shows an embodiment of a mouthpiece 39a, wherein the mouthpiece comprises a nozzle plate 101 with a single central nozzle opening 111, wherein a width of the nozzle opening is larger compared to a height of the nozzle opening. Here, an elliptical nozzle opening is used, having a width-to-height ratio of approximately 6:1. The nozzle opening is moved slightly upward with respect to the center of the nozzle plate 101. This can be beneficial to aim the impact point of the flow on the sample S.

Figure 5D shows an embodiment of a mouthpiece 39a, wherein the mouthpiece comprises a nozzle plate 101 with a single central nozzle opening 111, wherein a width of the nozzle opening is larger compared to a height of the nozzle opening. The ratio is approximately 2:1.

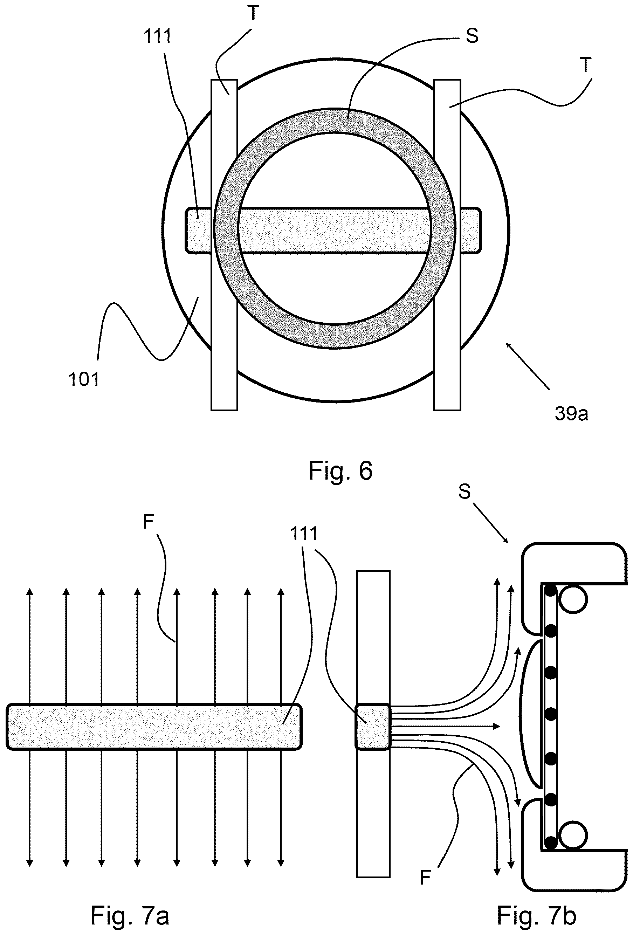

Now turning to Fig. 6, an embodiment of a mouthpiece 39a is shown, with the sample S and the manipulation tool T positioned in front of said mouthpiece. Here, the mouthpiece 39a comprises a nozzle plate 101 with a rectangular nozzle opening 111, having a width-to-height ratio of approximately 7:1, wherein the width is such that the dimension of the nozzle opening exceeds the dimension of the sample carrier S. The nozzle opening is thus also at least partially directed onto the tool T. With this embodiment, the sample can be cooled together with the larger ring-like structure, and the tool holding the sample.

This is shown in more detail in Fig. 7a and 7b. Fig. 7a shows a front view of the flow pattern, and Fig. 7b shows a side view of the flow pattern, coming out of nozzle opening 111. It can be seen that the flow is essentially a 2D flow, as stream lines are mainly a function of the Z and Y direction, but less so of the X direction. In other words: the flow pattern shown in Fig. 7B is substantially similar at each position X. Fig 7B shows that the flow bifurcates in an upwardly directed flow, and a downwardly directed flow. This allows the speed of the cryogenic fluid over the sample to be essentially constant over the height of the sample (i.e. Y direction), and provides improved cooling characteristics compared to a round nozzle, which leads to decreasing flow speeds as the radial position increases.

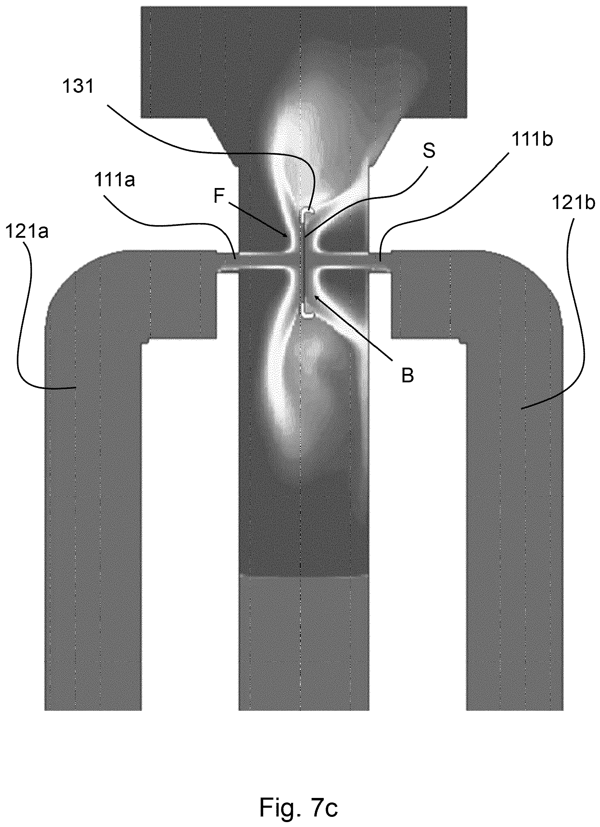

Fig. 7c shows a numerical simulation of the flow of liquid coolant onto the sample, where two nozzle openings 111a, 111b are used, with the sample S being situated in between these two nozzle openings 111a, 111b. Nozzle openings 111a, 111b are being provided with liquid coolant through flow channels 121a, 121b. Use can be made of a plunger device or a pumping mechanism. It can be seen that the flow of liquid coolant is directed to a frontside of the sample S and to a backside of the sample S as well. The flow pattern as shown in Fig. 7b establishes on the front side F of the sample S. At the backside B, the grid ring 131 is present, leading to a recessed part in the sample S. This influences the flow a bit, compared to the front side F. Nevertheless, there still is a bifurcated flow on both sides of the sample S.

Fig. 8 shows a comparison between the method and device as disclosed herein, and the multiple nozzle design as described in EP4067860A1. It can be seen that the elongated, "letter-box" shaped nozzle opening as described in the present disclosure provides for a faster cooling rate towards the glass temperature, and hence improves ice quality compared to previous methods.

The desired protection is conferred by the appended claims.

## Claims

1. A method of preparing a cryogenic sample, whereby the sample is subjected to rapid cooling using a cryogen, wherein the method comprises the following steps:
- Providing a sample, said sample comprising a specimen provided on a substantially planar specimen carrier;
- Providing at least one flow device for transporting cryogenic fluid to said sample, wherein said flow device comprises a first nozzle for directing a flow of cryogenic fluid onto said sample;
- Positioning said sample next to said first nozzle and providing a flow of cryogenic fluid out of said first nozzle in such a way that the sample is cryogenically cooled;
**characterized in that** a nozzle opening of the first nozzle has a width, as measured in a first direction, and a height, as measured in a second direction substantially perpendicular to said first direction, wherein said width is larger than said height.

2. A method according to claim 1, wherein said width exceeds a dimension of the specimen carrier, as measured in the first direction.

3. A method according to claim 1 or 2, wherein said height subceeds a dimension of the specimen carrier, as measured in the second direction.

4. A method according to claim 1-3, wherein said specimen carrier comprises a central part and a peripheral part, wherein said nozzle opening is directed to said specimen carrier in such a way that said central part and said peripheral part experience substantially equal cooling rates.

5. A method according to claim 1-4, wherein said nozzle opening of the first nozzle is substantially non-circular, and in particular wherein said nozzle opening of the first nozzle is substantially rectangular.

6. A method according to claim 1-5, wherein said width is substantially equal to the dimension of said specimen carrier as measured in the first direction.

7. A method according to claim 1 -6, wherein said height is less than 50% of the dimension of the specimen carrier as measured in the second direction, in particular less than 35%, more in particular less than 20%.

8. A method according to claim 1-7, wherein a width-height ratio lies in between 2:1 and 10:1, and preferably at approximately 6:1.

9. A method according to claim 1-8, wherein the nozzle opening of the first nozzle is positioned in such a way that the width dimension is positioned substantially level.

10. A method according to claim 1-9, wherein a width of the nozzle opening of the first nozzle is at least 2.5 mm, preferably at least 3.5 mm.

11. A method according to claim 1-10, wherein a height of the nozzle opening of the first nozzle lies in between 0.3 mm and 1 mm, and preferably at approximately 0.7 mm.

12. A method according to claim 1-11, wherein a velocity of the flow out of said nozzle opening of the first nozzle is in between 1.0 m/s and 20 m/s, preferably in between 5.0 m/s and 11 m/s, such as 8 m/s.

13. A method according to claim 1-12, wherein a flow rate of the cryogenic fluid out of said nozzle opening of the first nozzle is in between 2 ml/s and 80 ml/s, preferably in between 25 ml/s and 55 ml/s, such as 40 ml/s.

14. A method according to claim 1-13, wherein said flow device comprises a second nozzle, positioned at a distance from said first nozzle, and wherein the method comprises the further steps of:
- Positioning the sample in between said first nozzle and said second nozzle; and
- providing a flow of cryogenic fluid through the first nozzle and through the second nozzle to cryogenically cool the sample from two opposing sides.

15. A method according to claim 1-14, wherein a nozzle opening of said second nozzle is embodied according to one of the claims 1-13, and in particular wherein said nozzle opening of said second nozzle is identical to said nozzle opening of the first nozzle.

16. A method according to claims 1-15, wherein said flow device comprises a plunger, wherein:
- Said plunger comprises at least one flow channel having an inlet provided on an underside of the plunger, wherein downstream of said inlet the flow channel is provided with the first nozzle, and wherein the plunger comprises a gap for positioning said sample in a topside of the plunger;
- A bath of cryogenic fluid is provided beneath said plunger;
- Said sample is inserted into said gap using a tool that applies downward pressure on said plunger, thereby at least partially submerging the plunger and causing cryogenic fluid to flow out of said first nozzle.

17. An apparatus for preparing a cryogenic sample, whereby the sample is subjected to rapid cooling using a cryogen, said apparatus comprising:
- at least one flow device for transporting cryogenic fluid to said sample, wherein said flow device comprises a first nozzle for directing a flow of cryogenic fluid onto said sample;
**characterized in that** a nozzle opening of the first nozzle has a width, as measured in a first direction, and a height, as measured in a second direction substantially perpendicular to said first direction, wherein said width is larger than said height.

18. An apparatus according to claim 17, comprising an applicator device for applying a specimen to a specimen carrier.

19. An apparatus according to claim 17 or 18, comprising a blotting device for removing excess liquid from said specimen carrier.
